# FASCICULE DE BREVET EUROPEEN

(11) **EP 4 419 245 B1**
(45) Date de publication et mention de la délivrance du brevet: **09.07.2025**
(21) Numéro de dépôt: 22814474.7
(22) Date de dépôt: 06.10.2022
(51) Int. Cl.: B01J 8/00, B01J 8/02, B01J 19/24

(54) **RÉACTEUR TUBULAIRE À LIT FIXE AVEC OUVERTURES COLLECTRICES ET DISTRIBUTRICES DÉCALÉES**
FESTBETT-ROHRREAKTOR MIT VERSETZTEN ENTNAHME- UND VERTEILUNGSÖFFNUNGEN
FIXED-BED TUBULAR REACTOR WITH OFFSET COLLECTION AND DISTRIBUTION OPENINGS

(30) Priorité: 19.10.2021 FR 2111098
(43) Date de publication de la demande: 28.08.2024
(73) Titulaire: Commissariat à l'Energie Atomique et aux Energies Alternatives, 75015 Paris (FR)
(72) Inventeur: CHAISE, Albin, 38054 GRENOBLE Cedex 09 (FR)
(74) Mandataire: Brevalex
(86) Numéro de dépôt international: PCT/FR2022/051888
(87) Numéro de publication internationale: WO 2023/067262

(56) Documents cités:
- EP-A1- 3 827 895
- US-A1- 2011 165 483

## Description

### DOMAINE TECHNIQUE

La présente invention se rapporte au domaine des réacteurs-échangeurs. En particulier, la présente invention se rapporte au domaine des réacteurs-échangeurs catalytiques mettant en œuvre un catalyseur solide, et notamment un catalyseur solide sous forme de poudre.

La présente invention propose à cet égard un réacteur-échangeur catalytique susceptible de mettre en œuvre des procédés de synthèses organiques exothermiques. Ces composés organiques peuvent notamment comprendre des carburants de synthèse et du combustible.

### ÉTAT DE LA TECHNIQUE ANTÉRIEURE

Les réacteurs catalytiques utilisant des catalyseurs solides sont largement mis en œuvre pour la synthèse de composés organiques tels que les carburants de synthèse ou les combustibles parmi lesquels on peut citer les substituts de gaz naturel, le diméthyléther ou encore le méthanol.

Ces composés sont notamment obtenus par réaction d'hydrogène et d'oxyde de carbone en présence d'un catalyseur solide approprié.

Toutefois, les réactions chimiques relatives à la synthèse de ces composés sont très exothermiques, et dégagent par voie de conséquence une quantité de chaleur susceptible de dégrader le catalyseur solide. Il résulte de cette dégradation une réduction du taux de conversion des espèces chimiques en présence, et une diminution de la sélectivité des réactions mises en jeu. Par ailleurs, le catalyseur solide se désactive sous l'effet de la chaleur.

Ainsi, en pratique, ces réactions peuvent être mises en œuvre dans un réacteur-échangeur du type tube-calandre qui comprend un canal réactif pourvu du catalyseur solide et refroidi continument par un fluide caloporteur. Dans ce type de réacteur, les gaz réactifs circulent axialement dans les tubes qui contiennent un catalyseur, par exemple en poudre.

Néanmoins, en dépit de la mise en œuvre d'un refroidissement par le fluide caloporteur, ce type de réacteur reste sensible à la chaleur dégagée par les réactions se produisant dans le réacteur.

En particulier, un point chaud, généralement observé à proximité de l'entrée des gaz réactifs, dégrade le catalyseur solide, et réduit donc les performances du réacteur-échangeur.

Afin de limiter ces effets, les solutions suivantes ont été proposées :
- une réduction de la densité volumique de catalyseur, notamment en déposant ce dernier sur les parois du tube ou d'un insert ou en le diluant dans un milieu non réactif ;
- une dilution des gaz réactifs avec une partie des produits générés pour diminuer l'activité de la réaction ;
- réaliser plusieurs points d'injection d'un ou de plusieurs réactifs pour répartir la zone du point chaud sur une plus grande surface ;
- une réduction des dimensions des tubes ou en y plaçant des pièces conductrices de la chaleur afin d'améliorer le refroidissement des tubes.

Ces solutions ne sont toutefois pas satisfaisantes.

En effet, quand bien même elles permettent de réduire les effets du point chaud, elles sont complexes à mettre en œuvre.

Par ailleurs, leur mise en œuvre diminue la flexibilité d'utilisation du réacteur-échangeur, et rend ce dernier peu compact.

Afin de pallier ces problèmes, il alors été proposé un agencement permettant de répartir la distribution des réactifs sur toute la longueur des tubes. Cette solution permet alors d'obtenir une meilleure homogénéité de la température sur toute la longueur du réacteur.

A cet égard, les documents US 3,758,279 A, US 4,374,094 A, EP 0 560 157 A1 et US 2,997,374 A proposent des réacteurs-échangeurs mettant en œuvre une distribution des réactifs à partir d'un espace de distribution annulaire. Notamment, ces réacteurs-échangeurs, de forme généralement cylindrique, comprennent, agencés de manière coaxiale et à partir de l'extérieur du réacteur, un tube, l'espace de distribution annulaire, une charge de catalyseur et un espace de collecte.

Cet agencement n'est toutefois pas satisfaisant.

En effet, la présence de l'espace de distribution annulaire disposé autour de la charge de catalyseur, limite les transferts de chaleur du catalyseur vers le tube rendant peu efficace les systèmes de refroidissement généralement mis en œuvre. Il reste néanmoins possible d'insérer des éléments conducteurs de chaleur dans le réacteur. Une telle solution reste toutefois incompatible avec les réacteurs comprenant des tubes de faible diamètre.

Inversement, le document CN 103990420 A propose de mettre en œuvre un insert pourvu d'une chambre de distribution et d'une chambre de collecte, disposée au centre d'un tube et définissant avec ce dernier une espace annulaire logeant le catalyseur solide.

Toutefois, l'agencement proposé dans ce document ne permet pas de répartir de manière homogène au sein de l'espace annulaire. Plus particulièrement, cet agencement ne permet pas d'obtenir un profil de température optimal au sein du catalyseur solide.

Par ailleurs, on connait de la demande de brevet européen EP 3 827 895 A1 de la Demanderesse un principe de distribution étagée de gaz dans un réacteur-échangeur. Le réacteur comporte un catalyseur prévu dans un espace annulaire situé entre un tube creux et un insert creux pourvu de chambres de distribution et de collecte. Des ouvertures distributrices et collectrices sont prévues pour permettre la distribution et la collecte des gaz. La réalisation de telles ouvertures n'est pas optimale et il subsiste un besoin pour concevoir un principe alternatif de réalisation de celles-ci.

Un but de la présente invention est de proposer un réacteur tubulaire à lit fixe permettant une distribution plus uniforme des réactifs au sein du catalyseur solide.

Un autre but de la présente invention est également de proposer un réacteur tubulaire à lit fixe permettant une répartition plus homogène du flux de chaleur généré au sein du catalyseur solide.

Un autre but de la présente invention est également de proposer un réacteur tubulaire permettant une meilleure gestion du refroidissement.

Un autre but de la présente invention est également de proposer un réacteur tubulaire pour lequel la fiabilité et la durée de vie sont améliorées au regard des réacteurs connus de l'état de la technique.

Un autre but de la présente invention est de proposer un réacteur tubulaire permettant d'optimiser (augmenter) le temps de passage des gaz dans le lit fixe de poudre catalytique.

### EXPOSÉ DE L'INVENTION

L'invention vise à remédier au moins partiellement aux besoins et buts mentionnés précédemment et aux inconvénients relatifs aux réalisations de l'art antérieur.
L'invention a ainsi pour objet, selon l'un de ses aspects, un réacteur tubulaire à lit fixe qui s'étend, selon un axe longitudinal, entre une première extrémité et une deuxième extrémité,
le réacteur comprenant un lit de poudre catalytique confiné dans un espace annulaire délimité par une première paroi d'un tube creux et une deuxième paroi d'un insert creux, disposé dans le tube creux et de manière coaxiale à ce dernier,
l'insert creux comprenant au moins une chambre de distribution et au moins une chambre de collecte, séparées l'une de l'autre par une paroi séparatrice, et comprenant, respectivement, une ouverture d'admission de gaz au niveau de la première extrémité et une ouverture d'évacuation de gaz au niveau de la deuxième extrémité,
la deuxième paroi comprenant au moins une ouverture distributrice et au moins une ouverture collectrice, l'ouverture distributrice permettant la distribution d'un gaz susceptible d'être admis par l'ouverture d'admission de la chambre de distribution vers l'espace annulaire, et l'ouverture collectrice permettant la collecte du gaz distribué dans l'espace annulaire par la chambre de collecte,
caractérisé en ce que la deuxième paroi de l'insert creux comporte, sur au moins une première portion longitudinale de l'insert définie selon l'axe longitudinal, au moins une ouverture distributrice décalée et au moins une ouverture collectrice décalée, toute ouverture distributrice décalée étant contenue dans un plan transversal à l'axe longitudinal différent de tout plan transversal à l'axe longitudinal contenant une ouverture collectrice décalée de sorte que la direction du flux de gaz distribué et/ou admis entre une ouverture collectrice décalée et une ouverture distributrice décalée présente une composante axiale selon l'axe longitudinal.

Le réacteur selon l'invention peut en outre comporter l'une ou plusieurs des caractéristiques suivantes prises isolément ou suivant toutes combinaisons techniques possibles.

Il est entendu que dans la mesure où le réacteur selon la présente invention est tubulaire, le tube creux et l'insert creux sont nécessairement de forme cylindrique, mais pas nécessairement cylindrique de révolution.

Par ailleurs, dès lors que l'insert creux est disposé dans le tube creux et de manière coaxiale à ce dernier, l'espace annulaire peut présenter une symétrie de révolution.

Ainsi, le réacteur selon la présente invention permet de distribuer les gaz réactifs, du fait de l'étendue de l'ouverture de distribution, de manière relativement homogène dans l'espace annulaire. Ces derniers réagissent alors avec le lit de poudre catalytique sur toute la section couverte par l'ouverture de distribution. Les produits issus de la réaction des gaz, ainsi que les gaz n'ayant pas réagi sont collectés au niveau de l'ouverture de collecte et évacués du réacteur par l'ouverture d'évacuation opposée à l'ouverture d'admission.

Cet agencement pour lequel l'admission des gaz se fait par une extrémité et l'évacuation par l'autre extrémité permet une meilleure répartition des espèces réactives (les gaz) dans l'espace annulaire, et par voie de conséquence une meilleure répartition de la chaleur susceptible d'être dégagée lors de la réaction des espèces réactives dans l'espace annulaire.

Cette meilleure répartition de la chaleur dégagée permet de considérer un système de refroidissement moins puissant et donc de plus petites dimensions.

L'agencement selon la présente invention permet donc d'envisager un réacteur plus compact, et d'une fiabilité améliorée au regard des réacteurs tubulaires connus de l'état de la technique.

L'au moins une chambre de distribution peut être obturée au niveau de la deuxième extrémité, et l'au moins une chambre de collecte peut être obturée au niveau de la première extrémité.

Le réacteur peut comprendre au niveau de la première extrémité et au niveau de la deuxième extrémité, respectivement, un espace distributeur et un espace collecteur entre lesquels l'insert est disposé.

La poudre catalytique peut être retenue dans l'espace annulaire par un joint en matière fibreuse au niveau de chacune des extrémités de l'espace annulaire.

Le joint en matière fibreuse peut être maintenu en compression contre la poudre catalytique par un ressort, le ressort étant en butée contre une plaque de maintien liée mécaniquement au tube.

Le joint en matière fibreuse en combinaison avec le ou les ressorts permet de mieux compacter la poudre catalytique et de prévenir l'attrition de cette dernière lors de la manipulation ou le transport du réacteur.

La paroi externe peut être dépourvue d'ouverture sur une première section et une deuxième section qui s'étendent à partir, respectivement, de la première extrémité et de la deuxième extrémité, la première section et la deuxième section étant en recouvrement avec le lit de poudre sur une hauteur H, la hauteur H étant comprise entre 0,5 fois et 10 fois, avantageusement comprise entre 1 fois et 2 fois, la distance séparant une ouverture de distribution d'une ouverture de collecte immédiatement adjacente, et mesurée le long de la surface externe de la paroi externe.

Ainsi, un tel agencement permet d'imposer un temps de passage aux gaz réactifs susceptibles de pénétrer dans l'espace annulaire par le joint fibreux.

L'insert creux peut être muni de moyens de centrage maintenant ce dernier en position coaxiale avec le tube creux, de manière avantageuse, les moyens de centrage comprennent des bossages formés sur la deuxième paroi.

Ces moyens de centrage permettent un montage plus facile du réacteur.

La surface d'une section de la chambre de distribution selon un plan de coupe transversal à l'axe longitudinal peut diminuer de la première extrémité vers la deuxième extrémité, avantageusement, ladite surface est nulle au niveau de la deuxième extrémité.

Les méthodes de fabrication additive, et notamment les techniques de fabrication 3D permettent de réaliser ces structures complexes sous forme d'une pièce monobloc.

La surface d'une section de la chambre de collecte selon un plan de coupe transversal à l'axe longitudinal peut augmenter de la première extrémité vers la deuxième extrémité, avantageusement, ladite surface est nulle au niveau de la première extrémité.

L'ouverture de collecte et l'ouverture de distribution peuvent présenter une largeur comprise entre 1/100 et 1/2, avantageusement comprise entre 1/20 et 1/4, du diamètre du tube creux.

L'ouverture de collecte et l'ouverture de distribution peuvent comprendre chacune un filtre prévenant le passage de poudre catalytique dans l'une ou l'autre des chambres de collecte ou de distribution.

Le filtre peut comprendre une pluralité de plans de fibres inclinées.

L'insert creux peut former une pièce monobloc.

Par ailleurs, la deuxième paroi de l'insert creux peut comporter, sur au moins une deuxième portion longitudinale de l'insert définie selon l'axe longitudinal, au moins une ouverture distributrice alignée et au moins une ouverture collectrice alignée, toute ouverture distributrice alignée étant contenue dans un plan transversal à l'axe longitudinal contenant également au moins une ouverture collectrice alignée de sorte que la direction du flux de gaz distribué et/ou admis entre une ouverture collectrice alignée et une ouverture distributrice alignée présente une composante axiale sensiblement nulle selon l'axe longitudinal.

Une pluralité d'ouvertures collectrices alignées et/ou une pluralité d'ouvertures distributrices alignées peuvent être alignées axialement selon l'axe longitudinal.

En outre, ladite au moins une ouverture collectrice et/ou ladite au moins une ouverture distributrice peuvent être choisies parmi : une fente longitudinale s'étendant sur une longueur selon l'axe longitudinal; une fente transversale s'étendant sur une largeur transversalement à l'axe longitudinal ; un orifice local, notamment de forme circulaire, ovale, oblongue ou rectangulaire ; entre autres.

Une pluralité d'ouvertures collectrices décalées et/ou une pluralité d'ouvertures distributrices décalées peuvent se présenter respectivement sous la forme d'un nuage d'ouvertures collectrices décalées dont notamment au moins deux sont contenues dans un même plan transversal et/ou sous la forme d'un nuage d'ouvertures distributrices décalées dont notamment au moins deux sont contenues dans un même plan transversal.

Le nuage d'ouvertures distributrices décalées peut comporter au moins une ouverture distributrice décalée dédiée à une distribution primaire de gaz et au moins une ouverture distributrice décalée dédiée à une distribution secondaire de gaz, différente de la distribution primaire de gaz. En complément ou en variante, le nuage d'ouvertures collectrices décalées peut comporter au moins une ouverture collectrice décalée dédiée à une collection primaire de gaz et au moins une ouverture collectrice décalée dédiée à une collection secondaire de gaz, différente de la collection primaire de gaz.

Ladite au moins une ouverture collectrice décalée et ladite au moins une ouverture distributrice décalée peuvent ne pas être superposées axialement selon l'axe longitudinal.

En outre, la distance minimale entre une ouverture collectrice décalée et une ouverture distributrice décalée peut être comprise entre la moitié du diamètre de l'insert et la moitié de la longueur totale de l'insert.

Plusieurs ouvertures distributrices décalées peuvent être situées dans un même plan transversal à l'axe longitudinal et espacées régulièrement entre elles. En complément ou en variante, plusieurs ouvertures collectrices décalées peuvent être situées dans un même plan transversal à l'axe longitudinal et espacée régulièrement entre elles.

Par ailleurs, ladite au moins une ouverture collectrice décalée et/ou ladite au moins une ouverture distributrice décalée peuvent être obtenues par usinage et/ou par fabrication additive.

### BRÈVE DESCRIPTION DES DESSINS

L'invention pourra être mieux comprise à la lecture de la description détaillée qui va suivre, d'exemples de mise en œuvre non limitatifs de celle-ci, ainsi qu'à l'examen des figures, schématiques et partielles, du dessin annexé, sur lequel :
[Fig. 1] est une représentation schématique d'un réacteur tubulaire à lit fixe selon une première variante de la présente invention, en particulier [Fig. 1] représente le réacteur selon un plan de coupe longitudinale passant par un axe longitudinal XX' du réacteur ;
[Fig. 2] est une représentation schématique du réacteur de [Fig. 1] selon un plan de coupe transversal perpendiculaire à l'axe longitudinal ;
[Fig. 3] est une représentation d'un filtre, et notamment d'un filtre formé de quatre plans de fibres, susceptible d'être mis en œuvre dans le réacteur tubulaire selon la présente invention ;
[Fig. 4] est une représentation d'un réacteur tubulaire à lit fixe selon la première variante de la présente invention au niveau de la première extrémité illustrant l'agencement du joint et du ressort retenant le lit de poudre catalytique ;
[Fig. 5] est une représentation schématique de l'insert creux selon le plan de coupe AA' de [Fig. 4] ;
[Fig. 6] est une représentation schématique d'un insert selon une deuxième variante de la présente invention, en particulier [Fig. 6] représente le réacteur selon un plan de coupe longitudinale passant par un axe longitudinal XX' du réacteur ;
[Fig. 7A], [Fig. 7B], [Fig. 7C], [Fig. 7D] et [Fig. 7E] sont des vues, respectivement, selon les plans de coupe A, B, C, D et E de l'insert creux représenté à [Fig. 6] ;
[Fig. 8] est une représentation schématique d'un insert selon une troisième variante de la présente invention, en particulier [Fig. 8] représente le réacteur selon un plan de coupe longitudinale passant par un axe longitudinal XX' du réacteur ;
[Fig. 9] et [Fig. 10] sont des vues, respectivement, selon les plans de coupe CC' et DD' de l'insert creux représenté à [Fig. 8] ;
[Fig. 11], [Fig. 12] et [Fig. 13] sont des représentations schématiques de variantes de réalisation d'une deuxième portion longitudinale d'un insert comprenant au moins une ouverture distributrice alignée et au moins une ouverture collectrice alignée ;
[Fig. 14], [Fig. 15] et [Fig. 16] sont des représentations schématiques de variantes de réalisation d'une première portion longitudinale d'un insert comprenant au moins une ouverture distributrice décalée et au moins une ouverture collectrice décalée ;
[Fig. 17] est une représentation schématique d'un réacteur tubulaire à lit fixe selon un plan de coupe longitudinale illustrant la circulation du gaz au niveau des ouvertures distributrices et collectrices décalées ;
[Fig. 18] est une représentation schématique de l'insert de [Fig. 17] ; et
[Fig. 19] est une vue en coupe selon C-C de [Fig. 18].

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

La présente invention concerne un réacteur-échangeur tubulaire à lit de poudre catalytique fixe. En particulier, le lit de poudre catalytique est confiné dans un espace annulaire délimité par une première paroi d'un tube creux et une deuxième paroi d'un insert creux disposé dans le tube et de manière coaxiale à ce dernier.

L'insert creux selon la présente invention est notamment agencé pour permettre une admission de gaz réactifs selon une première extrémité du réacteur dans une chambre de distribution de l'insert. Ces derniers sont ensuite distribués sur une section de l'espace annulaire par une ouverture de distribution permettant un passage des gaz de la chambre de distribution vers l'espace annulaire.

Les produits issus de la réaction entre espèces réactives sont ensuite collectés, par l'intermédiaire d'une ouverture de collecte, dans une chambre de collecte de l'insert creux, isolée de la chambre de distribution par une paroi séparatrice.

L'évacuation des produits s'effectue par une ouverture d'évacuation de la chambre de collecte au niveau de la deuxième extrémité.

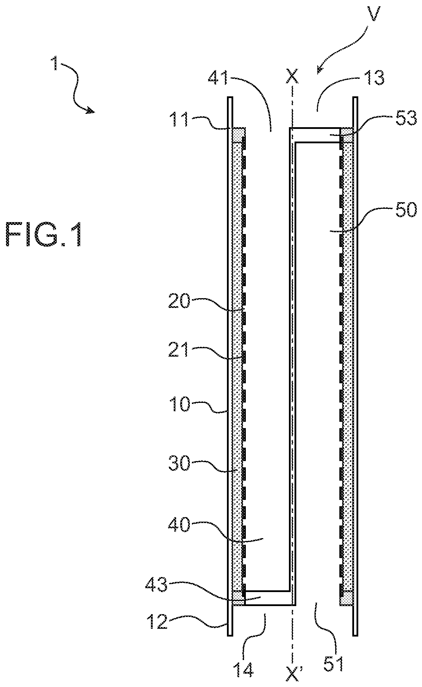

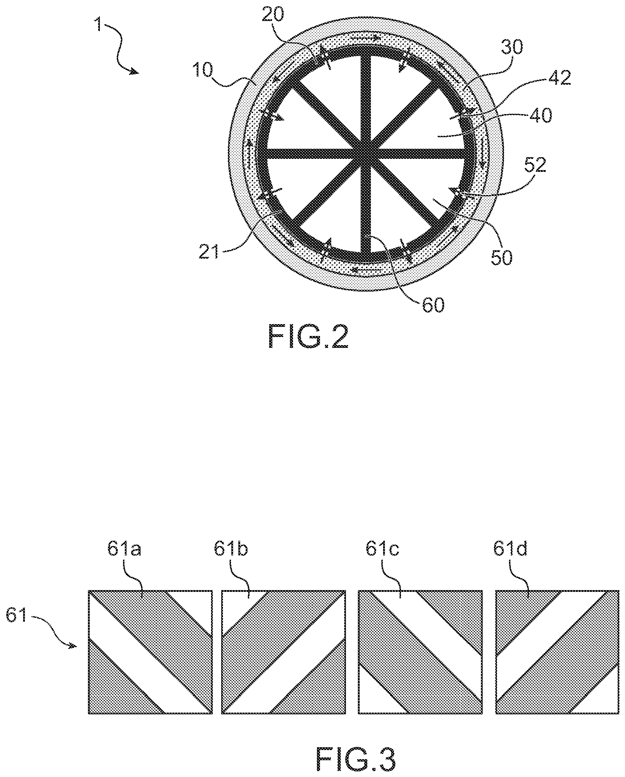

Aux figures 1 et 2, on peut voir un exemple de réalisation d'un réacteur tubulaire à lit fixe selon une première variante de la présente invention.

Le réacteur tubulaire 1 selon la présente invention comprend un tube creux 10 qui, s'étend selon un axe longitudinal XX', entre une première extrémité 11 et une deuxième extrémité 12.

Le tube creux 10 peut présenter une symétrie de révolution autour de l'axe longitudinal XX'. Le tube creux 10 peut comprendre un métal, et notamment un métal choisi parmi : acier, alliage d'aluminium, de cuivre, de nickel, entre autres. Le diamètre de la surface interne du tube creux 10 peut être compris entre 5 mm et 100 mm.

La paroi, dite première paroi, formant le tube creux 10 peut présenter une épaisseur comprise entre 0,5 mm et 10 mm. Le tube creux 10 peut présenter une longueur comprise entre 10 fois et 200 fois son diamètre interne.

Le réacteur tubulaire 1 comprend également un insert creux 20 qui s'étend également selon l'axe longitudinal XX' et présente une forme cylindrique. L'insert creux 20 peut être une pièce monobloc.

L'insert creux 20 est notamment logé dans le volume V du tube creux 10 de manière coaxiale à ce dernier. En particulier, l'insert 20 comprend une paroi, dite deuxième paroi 21, qui délimite avec la première paroi du tube creux un espace annulaire 30.

L'espace annulaire 30 est, à cet égard, rempli d'une poudre catalytique qui sera le siège des réactions de conversion de gaz réactifs susceptibles de transiter dans le réacteur tubulaire 1.

L'espace annulaire 30 peut présenter une épaisseur, définie comme la distance entre la première paroi et la deuxième paroi, comprise entre 2% et 20 % du diamètre interne de la première paroi.

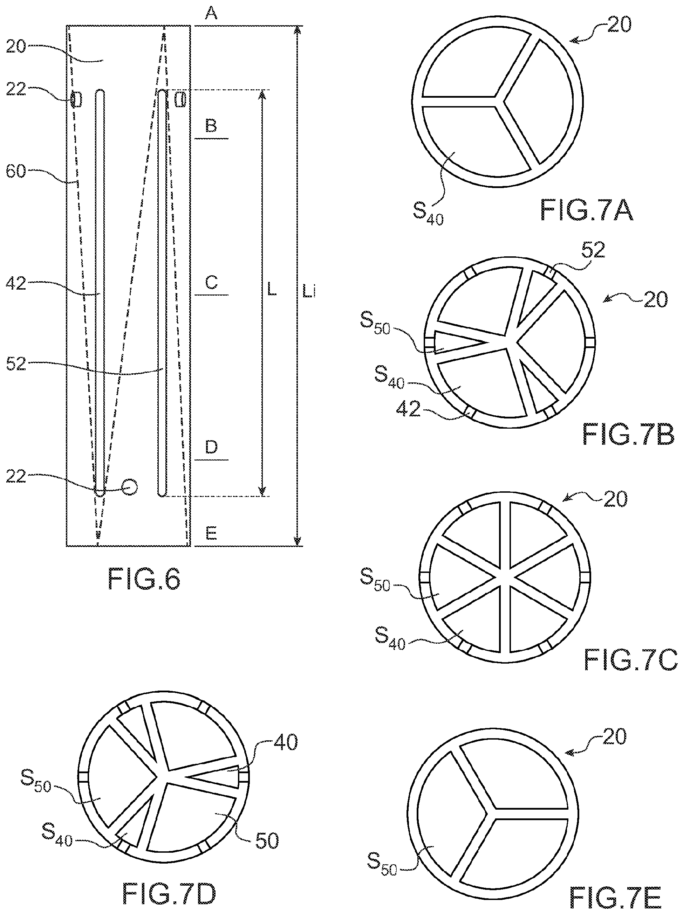

De manière particulièrement avantageuse, l'insert creux 20 peut être muni de moyens de centrage maintenant ce dernier en position coaxiale avec le tube creux 10. Par exemple, tel que représenté à la figure 6 relative à une seconde variante de la présente invention discutée dans la suite de l'énoncé, les moyens de centrage comprennent des bossages 22 formés sur la deuxième paroi 21.

Ces moyens de centrage 22 permettent notamment de considérer un insert creux 20 d'une longueur au moins 20 fois supérieure au diamètre dudit insert. Par ailleurs, ces moyens de centrage 22 permettent également de faciliter le montage du réacteur tubulaire 1.

L'insert creux 20 comprend par ailleurs au moins une chambre de distribution 40 et au moins une chambre de collecte 50. En particulier, l'insert creux 20 peut comprendre entre une et quatre chambres de distribution 40, et entre une et quatre chambres de collecte 50.

Les chambres de distribution 40 et les chambres de collecte 50 sont avantageusement disposées en alternance, s'étendent sur toute la longueur de l'insert creux 20 et sont séparées les unes des autres par des parois séparatrices 60.

Plus particulièrement, les parois séparatrices 60 s'étendent sur toute la longueur de l'insert creux 20 dans le volume défini par l'insert creux 20.

Par ailleurs, l'au moins une chambre de distribution 40 comprend une ouverture d'admission 41 au niveau d'une extrémité de l'insert 20 par laquelle un ou des gaz réactifs sont susceptibles d'être admis.

De manière équivalente, l'au moins une chambre de collecte 50 comprend une ouverture d'évacuation 51 au niveau de l'autre extrémité de l'insert creux 20 et par laquelle un ou plusieurs gaz sont susceptibles d'être évacués.

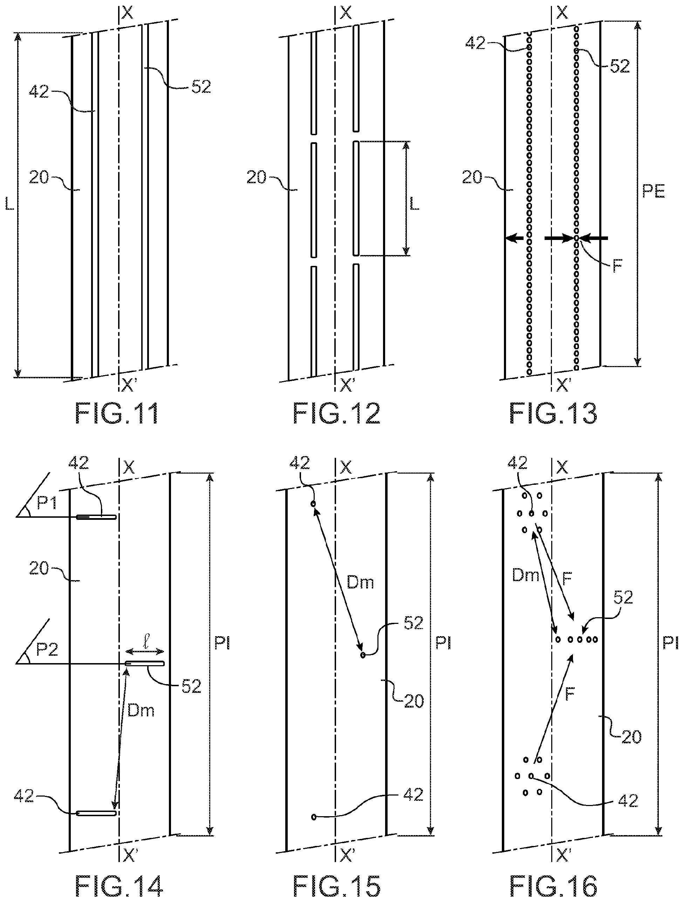

L'insert creux 20 est également pourvu d'au moins une ouverture distributrice 42, ou de distribution, et d'au moins une ouverture collectrice 52, ou de collecte. En particulier, l'ouverture distributrice 42 forme un passage perméable aux gaz réactifs de la chambre distributrice 40 vers l'espace annulaire 30. De manière équivalente, l'ouverture de collecte 52 forme un passage perméable aux gaz de l'espace annulaire 30 vers la chambre de collecte 50. Conformément à l'invention, et comme mieux illustré aux figures14 à 16, l'insert creux 20 comporte au moins une ouverture distributrice décalée 42 et un ouverture collectrice décalée 52.

Les ouvertures de distribution 42 et collectrice 52 s'étendent ici sur une longueur L. Avantageusement, la longueur L est supérieure à la moitié, avantageusement aux trois quarts de la longueur d'extension selon l'axe longitudinal XX' de l'espace annulaire 30.

Par ailleurs, l'au moins une chambre de distribution 40 est obturée au niveau de la deuxième extrémité 12, tandis que l'au moins une chambre de collecte 50 est obturée au niveau de la première extrémité 11. À cet égard, tel qu'illustré à la figure 1, la chambre de distribution 40 est obturée par une paroi de distribution 43, tandis que la chambre de collecte 50 est obturée par une paroi de collecte 53.

De manière complémentaire, le réacteur tubulaire 1 peut comprendre au niveau de la première extrémité 11 et au niveau de la deuxième extrémité 12, respectivement, un espace distributeur 13 et un espace collecteur 14 entre lesquels l'insert creux 20 est disposé.

De manière avantageuse, l'ouverture de collecte 42 et l'ouverture de distribution 52 présentent une largeur comprise entre 1/100 et 1/2, avantageusement comprise entre 1/20 et 1/4, du diamètre du tube creux 10.

Toujours de manière avantageuse, l'ouverture de collecte 52 et l'ouverture de distribution 42 comprennent chacune un filtre 61 prévenant le passage de poudre catalytique dans l'une ou l'autre des chambres de collecte 50 ou de distribution 40.

Par exemple, et tel qu'illustré à la figure 3, le filtre 61 peut comprendre une pluralité de plans 61a, 61b, 61c et 61d comprenant des fibres. L'exemple illustré à la figure 3 comprend en particulier quatre plans, pourvus chacun de fibres rectangulaires ou rondes et inclinées à plus ou moins 45° par rapport à l'axe longitudinal XX'. Plus particulièrement, les fibres de deux plans successifs sont orientées selon deux angles différents, et sont notamment perpendiculaires d'un plan à l'autre.

Ainsi, lors du fonctionnement du réacteur 1, un ou des gaz réactifs sont admis dans la chambre de distribution 40 par l'ouverture d'admission 41. Ces gaz passent ensuite au travers de l'ouverture de distribution 42 et s'écoulent dans l'espace annulaire 30 afin d'être mis en contact avec le lit de poudre catalytique. Lors de cet écoulement dans l'espace annulaire 30, qui se produit essentiellement entre une ouverture de distribution 42 et une ouverture de collecte 52 qui lui est immédiatement adjacente, les gaz réactifs sont convertis, au moins en partie, en produits. Ces derniers, ainsi que la fraction de gaz réactifs n'ayant pas réagi, passent au travers de l'ouverture de collecte 52 ainsi considérée et sont collectés dans la chambre de collecte 50. Les produits et des gaz réactifs n'ayant pas réagi ainsi collectés sont ensuite évacués par l'ouverture d'évacuation 51.

Ainsi, l'étendue des ouvertures de distribution 42 sur la longueur L permet de distribuer les gaz réactif dans l'espace annulaire 30 sur ladite longueur L. En d'autres termes, cet agencement permet de distribuer la quantité de chaleur susceptible d'être produite lors de la conversion des gaz réactifs en produits sur toute la longueur L. Cet agencement permet ainsi de limiter l'augmentation de température locale du lit de poudre catalytique. L'étendue sur la longueur L des ouvertures de collecte 52 permet, selon un principe équivalent, de limiter l'échauffement du lit de poudre catalytique.

Par ailleurs, la disposition des ouvertures d'admission 41 et d'évacuation 51 sur des extrémités opposées de l'insert creux 20 contribue également à une meilleure distribution des réactifs au sein de l'espace annulaire 30 et par voie de conséquence à une meilleure homogénéisation de la température du lit de poudre catalytique.

Tous ces aspects contribuent à limiter l'apparition de points chauds et ainsi préserver le lit de poudre catalytique. Il en résulte une meilleure fiabilité du réacteur tubulaire 1 et une augmentation de sa durée de vie.

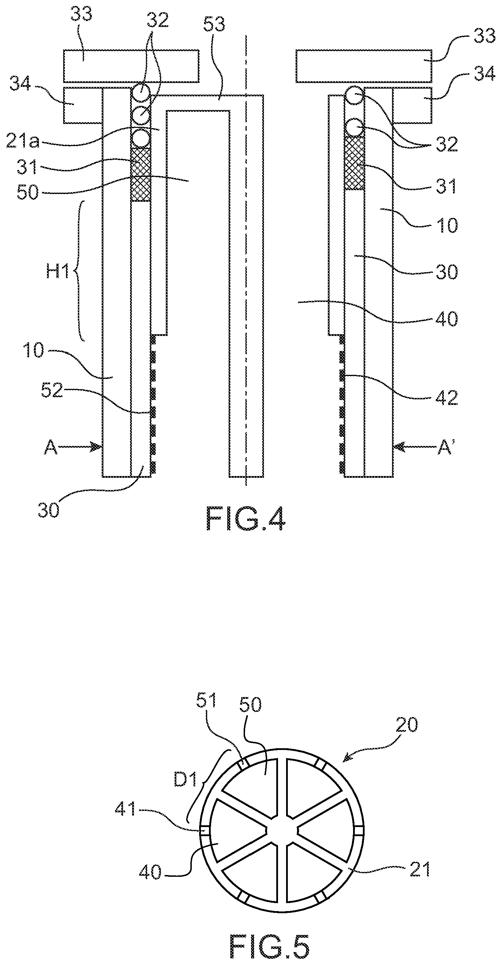

Selon un aspect particulièrement avantageux illustré à la figure 4, la poudre catalytique est retenue dans l'espace annulaire 30 par un joint 31 en matière fibreuse au niveau de chacune des extrémités de l'espace annulaire 30.

Dans la mesure où le joint est en matière fibreuse, ce dernier est nécessairement poreux et donc perméable aux gaz réactifs. La matière fibreuse peut à cet égard comprendre au moins un des éléments choisi parmi : fibres de verre, fibres de céramique, fibres de métal, fibres de carbone, fibres de matériau polymère, entre autres.

Le joint 31 peut notamment être sous forme d'une tresse, d'une gaine, d'une cordelette ou simplement comprendre un bourrage de la matière fibreuse. La matière fibreuse est avantageusement un isolant thermique et présente une conductivité thermique sensiblement équivalente à celle du catalyseur utilisé (0,2 W/m/K à 10 W/m/K).

Selon un mode de réalisation avantageux, le joint 31 en matière fibreuse est maintenu en compression contre la poudre catalytique par un ressort 32. Par exemple, le ressort 32 est en butée contre une plaque de maintien 33 lié mécaniquement au tube 10 par une bague 34.

Le joint 31 en matière fibreuse en combinaison avec le ou les ressorts 32 permet de mieux compacter la poudre catalytique et de prévenir l'attrition de cette dernière lors de la manipulation ou le transport du réacteur.

Dans la mesure où le joint 31 est poreux, les gaz réactifs peuvent pénétrer dans l'espace annulaire directement sans passer par la chambre de distribution 40.

Dans ce cas de figure (figure 4), il est particulièrement avantageux de prévoir un agencement de l'insert creux 20 permettant d'imposer à ce gaz réactif un chemin de parcours prédéterminé dans l'espace annulaire 30 afin de favoriser sa conversion au contact du lit de poudre catalytique. Ce parcours prédéterminé est d'une longueur comprise entre 0,2 fois et 10 fois, avantageusement comprise entre 1 fois et 2 fois, la distance D₁ (figure 5) séparant une ouverture de distribution 42 d'une ouverture de collecte 52 immédiatement adjacente, et mesurée le long de la surface externe de la deuxième paroi 21 de l'insert 20.

À cette fin, la deuxième paroi 21 peut être dépourvue d'ouverture sur une première section 21a et une deuxième section qui s'étendent à partir, respectivement, de la première extrémité 11 et de la deuxième extrémité 12.

À cet égard, la première section 21a et la deuxième section sont en recouvrement avec le lit de poudre sur une hauteur H1. La hauteur H1 étant comprise entre 0,5 fois et 10 fois, avantageusement entre une fois et 2 fois, la distance D₁ séparant une ouverture de distribution 42 d'une ouverture de collecte 52 immédiatement adjacente, et mesurée le long de la surface externe de la deuxième paroi 21.

La figure 6 illustre une deuxième variante de la présente invention qui reprend pour l'essentiel les caractéristiques de la première variante. L'insert creux 20 relative à cette deuxième variante est avantageusement fabriqué selon une technique de fabrication additive.

Selon cette deuxième variante, la chambre de distribution 40 présente un profil convergent de la première extrémité 11 vers la deuxième extrémité 12.

En d'autres termes, la surface S₄₀ d'une section de la chambre de distribution 40 selon un plan de coupe transversal à l'axe longitudinal XX' diminue de la première extrémité 11 vers la deuxième extrémité 12 (figures 7A à 7E), avantageusement, la surface est nulle au niveau de la deuxième extrémité 12.

De manière équivalente, la surface S₅₀ d'une section de la chambre de collecte 50 selon un plan de coupe transversal à l'axe longitudinal XX' augmente de la première extrémité 11 vers la deuxième extrémité 12, avantageusement, la surface est nulle au niveau de la première extrémité 11.

Cet agencement des chambres de distribution 40 et de collecte 50 permet de minimiser les pertes de charge liées à la circulation des gaz. Les inhomogénéités de débit dans l'espace annulaire 30 sont ainsi réduites.

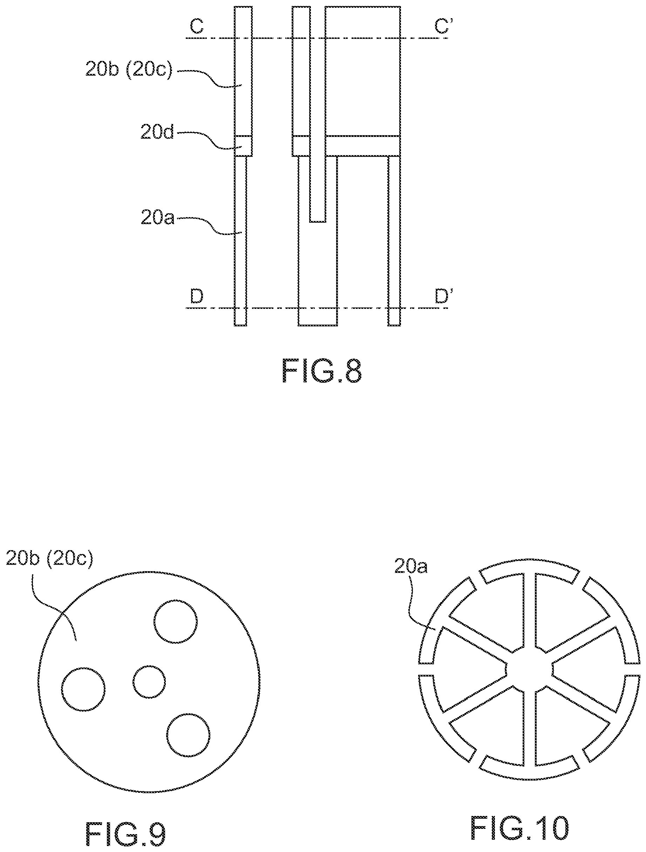

La figure 8 représente un insert creux 20 susceptible d'être mis en œuvre selon une troisième variante de la présente invention. Cette troisième variante reprend pour l'essentiel les caractéristiques relatives à la première et à la deuxième variante.

L'insert 20 relatif à cette deuxième variante peut être fabriqué par usinage, par découpage, par électroérosion, par extrusion, entre autres.

En particulier, l'insert 20 comprend selon cette variante un corps principal 20a intercalé entre deux corps terminaux 20b, 20c, et assemblés au moyen d'un joint 20d.

Les deux corps terminaux 20b, 20c, illustrés à la figure 8, comprennent une paroi cylindrique non perméable au gaz reproduisant la première section 21a décrite dans le cadre de la première variante, et comprend des ouvertures de distribution 42 (ou de collecte 52).

Comme indiqué précédemment, un réacteur 1 conforme à l'invention comporte un insert 20 pourvu d'au moins une ouverture collectrice décalée 52 et d'au moins une ouverture distributrice décalée 42, comme expliqué par la suite.

Toutefois, comme illustré aux figures 11 à 13 notamment, la deuxième paroi 21 de l'insert creux 20 peut comporter, sur une ou plusieurs deuxièmes portions longitudinales PE de l'insert 20 définie selon l'axe longitudinal XX', ici une seule deuxième portion longitudinale PE, une ou plusieurs ouvertures distributrices alignées 42 et une ou plusieurs ouvertures collectrices alignées 52.

Ces ouvertures collectrices 52 et distributrices 42 alignées sont définies de telle sorte que toute ouverture distributrice alignée 42 est contenue dans un plan transversal à l'axe longitudinal XX' contenant également au moins une ouverture collectrice alignée 52 de sorte que la direction du flux de gaz distribué et/ou admis entre une ouverture collectrice alignée 52 et une ouverture distributrice alignée 42 présente une composante axiale sensiblement nulle selon l'axe longitudinal XX'.

Ainsi, plus précisément, comme visible sur les figures 11 à 13, une section transversale de la deuxième portion longitudinale PE de l'insert 20 contenant une ouverture collectrice alignée 52 contient également une ouverture distributrice alignée 42.

Dans l'exemple de la figure 11, une seule ouverture distributrice alignée 42 de longueur L selon l'axe longitudinal XX' est prévue, ainsi qu'une seule ouverture collectrice alignée 52 de longueur L également. Ces deux ouvertures sont donc disposées longitudinalement selon l'axe de l'insert 20 de façon continue. Dans ce cas, l'insert 20 peut notamment être réalisé par extrusion, par pliage ou par électroérosion filaire sans usinage ultérieur.

Dans l'exemple de la figure 12, une pluralité d'ouvertures collectrices alignées 52 est prévue, chacune de longueur L, et une pluralité d'ouvertures distributrices alignées 42, chacune de longueur L, également. Les ouvertures collectrices alignées 52 forment ainsi des ouvertures disposées longitudinalement selon l'axe de l'insert 20 de manière semi-continue. Il est de même pour les ouvertures distributrices alignées 42.

Dans l'exemple de la figure 13, une pluralité d'ouvertures collectrices alignées 52 et une pluralité d'ouvertures distributrices alignées 42 sont prévues, chacune étant sous la forme d'un orifice, notamment de forme circulaire, ovale, oblongue ou rectangulaire, par exemple par utilisation de l'impression 3D. Ainsi, on obtient une disposition ponctuelle des ouvertures 42, 52 selon l'axe de l'insert.

Dans ces exemples des figures 12 et 13, les ouvertures 42, 52 sont usinées après fabrication de l'insert 20 ou bien encore réalisées par fabrication additive, notamment impression 3D. Elles permettent d'obtenir une meilleure rigidité mécanique et de conserver une zone sans ouverture aux extrémités de l'insert 20 de sorte à simplifier la réalisation du confinement du catalyseur.

Dans ces trois configurations, propres aux ouvertures alignées 52, 42 prévues dans une deuxième portion longitudinale PE de l'insert 20, la circulation du gaz à l'extérieur de l'insert 20 se fait dans la direction orthoradiale, comme représenté par les flèches F sur la figure 13.

Cependant, dans le cas où la réaction nécessite un temps de séjour des réactifs dans le catalyseur qui soit long tout en conservant une vitesse du gaz qui permet de s'affranchir de phénomènes limitant du point de vue cinétique, il convient d'améliorer la disposition de telles ouvertures 42, 52. Deux solutions peuvent notamment être envisagées : soit le nombre de sections de l'insert 20 peut être diminué, avec au minimum deux sections ; soit les ouvertures 42, 52 peuvent organiser une circulation non plus seulement dans la direction orthoradiale mais intégrant également une composante axiale.

La première solution présente une limite, à savoir au minimum deux sections, et il n'est pas souhaitable d'avoir un dégagement de chaleur uniquement d'un côté de l'insert 20 car des contraintes thermomécaniques peuvent apparaître et déformer les tubes. Une symétrie peut être retrouvée avec quatre sections mais cela n'offre qu'un très faible marge.

La deuxième solution est la plus appropriée et constitue la solution mise en œuvre par l'invention. Précisément, elle consiste en ce que la deuxième paroi 21 de l'insert creux 20 comporte, sur au moins une première portion longitudinale Pl de l'insert 20 définie selon l'axe longitudinal XX', au moins une ouverture distributrice décalée 42 et au moins une ouverture collectrice décalée 52.

Ces ouvertures décalées 52, 42 sont définies de telle sorte que toute ouverture distributrice décalée 42 est contenue dans un plan transversal P1 à l'axe longitudinal XX' différent de tout plan transversal P2 à l'axe longitudinal XX' contenant une ouverture collectrice décalée 52 de sorte que la direction du flux de gaz distribué et/ou admis entre une ouverture collectrice décalée 52 et une ouverture distributrice décalée 42 présente une composante axiale selon l'axe longitudinal XX'.

Les figures 14 à 16 permettent d'illustrer des exemples de premières portions longitudinales Pl de l'insert 20 comprenant de telles ouvertures 42, 52 décalées.

Dans l'exemple de la figure 14, les ouvertures décalées 42, 52 sont sous la forme de fentes transversales s'étendant sur une largeur *l* transversalement à l'axe longitudinal XX'. On constate qu'une ouverture distributrice décalée 42 est contenue dans un plan transversal P1 différent d'un plan transversal P2 contenant une ouverture collectrice décalée 52.

Dans l'exemple de la figure 15, les ouvertures décalées 42, 52 sont sous la forme d'orifices locaux, notamment de forme circulaire, ovale, oblongue ou rectangulaire.

Dans l'exemple de la figure 16, des nuages d'ouvertures collectrices décalées 52 dont par exemple au moins deux sont contenues dans un même plan transversal et des nuages d'ouvertures distributrices décalées 42 dont par exemple au moins deux sont contenues dans un même plan transversal sont formés. Sur cette figure 16 est représentée par les flèches F la circulation mixte axiale et orthoradiale du flux de gaz autour de l'insert 20.

Il faut noter que des ouvertures décalées 52, 42 sous la forme de fentes longitudinales ou transversales, comme sur la figure 14, ou sous la forme de nuages d'orifices, comme sur la figure 16, permettent d'étaler sur une plus grande surface le point chaud issu de la rencontre entre les gaz réactifs et le catalyseur. Toutefois, pour certaines réactions ne présentant pas de point chaud, la réalisation d'injections ponctuelles sous forme d'orifices locaux, comme sur la figure 15, peut rendre la fabrication plus simple.

Conformément à l'invention, les ouvertures distributrices 42 et collectrices 52 sont décalées et donc ne sont pas dans un même plan transversal, à l'inverse des ouvertures alignées décrites précédemment. Ainsi, la distance parcourue par les gaz en contact avec le catalyseur peut être ajustée, et notamment cette distance peut être plus importante qu'avec une configuration d'une deuxième portion longitudinale PE décrite précédemment. Grâce à cette distance plus importante, la vitesse de circulation des gaz dans le lit de poudre catalytique peut être ajustée et il est ainsi possible d'améliorer les transferts de chaleur et de matière au sein du lit pour obtenir une température plus homogène et pour améliorer les cinétiques de réaction.

La répartition des ouvertures distributrices décalées 42 sous forme de nuages d'orifices ou de trous, sur une zone large, peut être assimilée à un étagement de la réaction pour injecter une deuxième partie des réactifs après avoir fait réagir une première partie des réactifs. Autrement dit, le nuage d'ouvertures distributrices décalées 42 peut comporter au moins une ouverture distributrice décalée 42 dédiée à une distribution primaire de gaz et au moins une ouverture distributrice décalée 42 dédiée à une distribution secondaire de gaz, différente de la distribution primaire de gaz.

Sur la figure 16, sept ouvertures distributrices décalées 42, ou trous d'injection, sont présentes. L'orifice central peut par exemple être considéré comme l'injection primaire de réactifs et les orifices satellites, entourant l'orifice central, peuvent être considérés comme des injections secondaires de réactifs. Cette double injection a notamment pour but de répartir le débit et donc la chaleur de réaction sur un plus grand volume de catalyseur et ainsi limiter le niveau de température souvent néfaste vis-à-vis de l'activité du catalyseur. Il peut être possible de modifier le diamètre de ces orifices pour contrôler la part de débit de réactif primaire et de réactif secondaire. Cela permet de mieux gérer la chaleur de réaction qui est souvent intense au moment où le gaz réactif entre en contact avec le catalyseur. Une meilleure gestion de cette chaleur permet par exemple de préserver les performances du catalyseur ou de maximiser la sélectivité de la réaction.

Par ailleurs, un autre avantage des ouvertures décalées 42, 52 par rapport aux ouvertures alignées 42, 52 est la possibilité de réduire la surface des ouvertures entre les chambres distributrices 40 et l'espace annulaire 30. En effet, une surface d'ouverture importante induit une faible vitesse des réactifs. Cela peut mener à une diffusion différentielle des espèces modifiant progressivement la composition du mélange réactif circulant axialement dans les chambres de distribution 40. Par exemple, le mélange réactif H₂/CO₂ va s'appauvrir en H₂ à mesure que le mélange progresse dans l'insert 20 car le dihydrogène H₂ va diffuser plus rapidement à travers les ouvertures que le dioxyde de carbone CO₂. Il convient donc d'augmenter la vitesse pour favoriser la convection du gaz au détriment de la diffusion des espèces au niveau des ouvertures distributrices 42, ce qui passe par une réduction du nombre des ouvertures distributrices 42, ce que permet le principe des ouvertures distributrices décalées 42 contrairement aux ouvertures distributrices alignées 42.

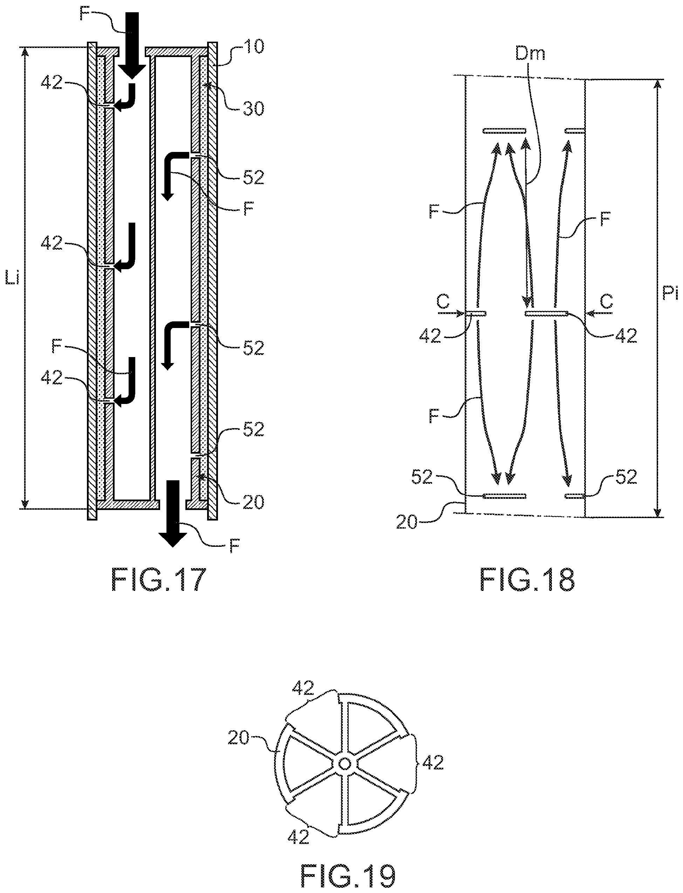

Sur l'exemple des figures 17 à 19, la circulation axiale et orthoradiale du flux de gaz F est représentée par les flèches F. En parcourant la direction axiale de l'insert 20, on constate une alternance entre les ouvertures distributrices 42 et les ouvertures collectrices 52 décalées.

On constate également que toutes les chambres de distribution 40, trois dans cet exemple, sont ouvertes aux mêmes abscisses ou même plan de coupe C-C, comme visible sur la figure 19. Il en est de même pour les chambres de collecte 50.

Il est à noter que la distance minimale Dm entre une ouverture collectrice décalée 52 et une ouverture distributrice décalée 42 est comprise entre la moitié du diamètre de l'insert 20 et la moitié de la longueur totale LI de l'insert 20, comme représentée sur les figures 14, 15, 16 et 18.

Le réacteur tubulaire selon la présente invention est avantageusement mis en œuvre pour la synthèse du méthane, du méthanol, du diméthyléther ou encore pour mettre en œuvre la synthèse de Fisher-Tropsch.

Bien entendu, l'invention n'est pas limitée aux exemples de réalisation qui viennent d'être décrits. Diverses modifications peuvent y être apportées par l'homme du métier.

## Revendications

1. Réacteur tubulaire (1) à lit fixe qui s'étend, selon un axe longitudinal (XX'), entre une première extrémité (11) et une deuxième extrémité (12),
le réacteur (1) comprenant un lit de poudre catalytique confiné dans un espace annulaire (30) délimité par une première paroi d'un tube creux (10) et une deuxième paroi (21) d'un insert creux (20), disposé dans le tube creux (10) et de manière coaxiale à ce dernier,
l'insert creux (20) comprenant au moins une chambre de distribution (40) et au moins une chambre de collecte (50), séparées l'une de l'autre par une paroi séparatrice (60), et comprenant, respectivement, une ouverture d'admission (41) de gaz au niveau de la première extrémité (11) et une ouverture d'évacuation (51) de gaz au niveau de la deuxième extrémité (12),
la deuxième paroi (21) comprenant au moins une ouverture distributrice (42) et au moins une ouverture collectrice (52), l'ouverture distributrice (42) permettant la distribution d'un gaz susceptible d'être admis par l'ouverture d'admission (41) de la chambre de distribution (40) vers l'espace annulaire (30), et l'ouverture collectrice (52) permettant la collecte du gaz distribué dans l'espace annulaire (30) par la chambre de collecte (50),
**caractérisé en ce que** la deuxième paroi (21) de l'insert creux (20) comporte, sur au moins une première portion longitudinale (Pl) de l'insert (20) définie selon l'axe longitudinal (XX'), au moins une ouverture distributrice décalée (42) et au moins une ouverture collectrice décalée (52), toute ouverture distributrice décalée (42) étant contenue dans un plan transversal (P1) à l'axe longitudinal (XX') différent de tout plan transversal (P2) à l'axe longitudinal (XX') contenant une ouverture collectrice décalée (52) de sorte que la direction du flux de gaz distribué et/ou admis entre une ouverture collectrice décalée (52) et une ouverture distributrice décalée (42) présente une composante axiale selon l'axe longitudinal (XX').

2. Réacteur selon la revendication 1, dans lequel la deuxième paroi (21) de l'insert creux (20) comporte, sur au moins une deuxième portion longitudinale (PE) de l'insert (20) définie selon l'axe longitudinal (XX'), au moins une ouverture distributrice alignée (42) et au moins une ouverture collectrice alignée (52), toute ouverture distributrice alignée (42) étant contenue dans un plan transversal à l'axe longitudinal (XX') contenant également au moins une ouverture collectrice alignée (52) de sorte que la direction du flux de gaz distribué et/ou admis entre une ouverture collectrice alignée (52) et une ouverture distributrice alignée (42) présente une composante axiale sensiblement nulle selon l'axe longitudinal (XX').

3. Réacteur selon la revendication 2, dans lequel une pluralité d'ouvertures collectrices alignées (52) et/ou une pluralité d'ouvertures distributrices alignées (42) sont alignées axialement selon l'axe longitudinal (XX').

4. Réacteur selon l'une des revendications précédentes, dans lequel ladite au moins une ouverture collectrice (52) et/ou ladite au moins une ouverture distributrice (42) sont choisies parmi : une fente longitudinale s'étendant sur une longueur (L) selon l'axe longitudinal (XX') ; une fente transversale s'étendant sur une largeur (l) transversalement à l'axe longitudinal (XX') ; un orifice local, notamment de forme circulaire, ovale, oblongue ou rectangulaire.

5. Réacteur selon l'une quelconque des revendications précédentes, dans lequel une pluralité d'ouvertures collectrices décalées (52) et/ou une pluralité d'ouvertures distributrices décalées (42) se présentent respectivement sous la forme d'un nuage d'ouvertures collectrices décalées (52) dont au moins deux sont contenues dans un même plan transversal et/ou sous la forme d'un nuage d'ouvertures distributrices décalées (42) dont au moins deux sont contenues dans un même plan transversal.

6. Réacteur selon la revendication 5, dans lequel le nuage d'ouvertures collectrices décalées (52) comporte au moins une ouverture collectrice décalée (52) dédiée à une collection primaire de gaz et au moins une ouverture collectrice décalée (52) dédiée à une collection secondaire de gaz, différente de la collection primaire de gaz, et/ou dans lequel le nuage d'ouvertures distributrices décalées (42) comporte au moins une ouverture distributrice décalée (42) dédiée à une distribution primaire de gaz et au moins une ouverture distributrice décalée (42) dédiée à une distribution secondaire de gaz, différente de la distribution primaire de gaz.

7. Réacteur selon l'une quelconque des revendications précédentes, dans lequel ladite au moins une ouverture collectrice décalée (52) et ladite au moins une ouverture distributrice décalée (42) ne sont pas superposées axialement selon l'axe longitudinal (XX').

8. Réacteur selon l'une quelconque des revendications précédentes, dans lequel la distance minimale (Dm) entre une ouverture collectrice décalée (52) et une ouverture distributrice décalée (42) est comprise entre la moitié du diamètre de l'insert (20) et la moitié de la longueur totale (LI) de l'insert (20).

9. Réacteur selon l'une quelconque des revendications précédentes, dans lequel plusieurs ouvertures collectrices décalées (52) sont situées dans un même plan transversal à l'axe longitudinal (XX') et espacées régulièrement entre elles, et/ou dans lequel plusieurs ouvertures distributrices décalées (42) sont situées dans un même plan transversal à l'axe longitudinal (XX') et espacées régulièrement entre elles.

10. Réacteur selon l'une quelconque des revendications précédentes, dans lequel ladite au moins une ouverture collectrice décalée (52) et/ou ladite au moins une ouverture distributrice décalée (42) sont obtenues par usinage et/ou par fabrication additive.

## Patentansprüche

1. Rohrreaktor (1) mit festem Bett, der sich entlang einer Längsachse (XX') zwischen einem ersten Ende (11) und einem zweiten Ende (12) erstreckt,
wobei der Reaktor (1), der ein katalytisches Pulverbett umfasst, das in einem ringförmigen Raum (30) eingeschlossen ist, der durch eine erste Wand eines Hohlrohrs (10) und eine zweite Wand (21) eines Hohleinsatzes (20) begrenzt ist, die im Hohlrohr (10) und koaxial zu diesem angeordnet sind,
wobei der Hohleinsatz (20), der mindestens eine Verteilerkammer (40) und mindestens eine Sammelkammer (50) umfasst, die durch eine Trennwand (60) voneinander getrennt sind, und jeweils eine Gaseinlassöffnung (41) am ersten Ende (11) und eine Gasauslassöffnung (51) am zweiten Ende (12) umfasst,
wobei die zweite Wand (21), die mindestens eine Verteileröffnung (42) und mindestens eine Sammelöffnung (52) umfasst, wobei die Verteileröffnung (42) die Verteilung eines Gases ermöglicht, das durch die Einlassöffnung (41) der Verteilerkammer (40) in den Ringraum (30) eingelassen werden kann, und die Sammelöffnung (52) die Sammlung des in den Ringraum (30) verteilten Gases durch die Sammelkammer (50) ermöglicht,
**dadurch gekennzeichnet, dass** die zweite Wand (21) des Hohleinsatzes (20) an mindestens einem ersten Längsabschnitt (Pl) des Einsatzes (20), der entlang der Längsachse (XX') definiert ist, mindestens eine versetzte Verteileröffnung (42) und mindestens eine versetzte Sammelöffnung (52) umfasst, wobei jede versetzte Verteileröffnung (42) in einer Querebene (P1) der Längsachse (XX') enthalten ist, die sich von jeder Querebene (P2) der Längsachse (XX') unterscheidet, eine versetzte Sammelöffnung (52) beinhaltend, so dass die Richtung des verteilten und/oder zugeführten Gasstroms zwischen einer versetzten Sammelöffnung (52) und einer versetzten Verteileröffnung (42) eine axiale Komponente entlang der Längsachse (XX') aufweist.

2. Reaktor nach Anspruch 1, wobei die zweite Wand (21) des Hohleinsatzes (20) an mindestens einem zweiten Längsabschnitt (PE) des Einsatzes (20), der entlang der Längsachse (XX') definiert ist, mindestens eine ausgerichtete Verteileröffnung (42) und mindestens eine ausgerichtete Sammelöffnung (52) umfasst, wobei jede ausgerichtete Verteileröffnung (42) in einer Ebene quer zur Längsachse (XX') enthalten ist, die auch mindestens eine ausgerichtete Sammelöffnung (52) enthält so, dass die Richtung des verteilten und/oder zugeführten Gasstroms zwischen einer ausgerichteten Sammelöffnung (52) und einer ausgerichteten Verteileröffnung (42) eine axiale Komponente im Wesentlichen null entlang der Längsachse (XX') aufweist.

3. Reaktor nach Anspruch 2, wobei eine Vielzahl von ausgerichteten Sammelöffnungen (52) und/oder eine Vielzahl von ausgerichteten Verteileröffnungen (42) axial entlang der Längsachse (XX') ausgerichtet sind.

4. Reaktor nach einem der vorhergehenden Ansprüche, wobei die mindestens eine Sammelöffnung (52) und/oder die mindestens eine Verteileröffnung (42) ausgewählt sind aus: einem Längsschlitz, der sich über eine Länge (L) entlang der Längsachse (XX') erstreckt; einem Querschlitz, der sich über eine Breite (1) quer zur Längsachse (XX') erstreckt; einer lokalen Öffnung, insbesondere in kreisförmiger, ovaler, länglicher oder rechteckiger Form.

5. Reaktor nach einem der vorhergehenden Ansprüche, wobei eine Vielzahl von versetzten Sammelöffnungen (52) und/oder eine Vielzahl von versetzten Verteileröffnungen (42) jeweils in Form einer Wolke von versetzten Sammelöffnungen (52) vorliegen, von denen mindestens zwei in derselben Querebene enthalten sind, und/oder in Form einer Wolke von versetzten Verteileröffnungen (42), von denen mindestens zwei in derselben Querebene enthalten sind.

6. Reaktor nach Anspruch 5, wobei die Wolke aus versetzten Sammelöffnungen (52) mindestens eine versetzte Sammelöffnung (52) für eine primäre Gassammlung und mindestens eine versetzte Sammelöffnung (52) für eine sekundäre Gassammlung, die sich von der primären Gassammlung unterscheidet, umfasst, und/oder wobei die Wolke aus versetzten Verteileröffnungen (42) mindestens eine versetzte Verteileröffnung (42) für eine primäre Gasverteilung und mindestens eine versetzte Verteileröffnung (42) für eine sekundäre Gasverteilung umfasst, die sich von der primären Gasverteilung unterscheidet.

7. Reaktor nach einem der vorhergehenden Ansprüche, wobei die mindestens eine versetzte Sammelöffnung (52) und die mindestens eine versetzte Verteileröffnung (42) nicht axial entlang der Längsachse (XX') überlagert sind.

8. Reaktor nach einem der vorhergehenden Ansprüche, wobei der Mindestabstand (Dm) zwischen einer versetzten Sammelöffnung (52) und einer versetzten Verteileröffnung (42) zwischen der Hälfte des Durchmessers des Einsatzes (20) und der Hälfte der Gesamtlänge (LI) des Einsatzes (20) liegt.

9. Reaktor nach einem der vorhergehenden Ansprüche, wobei mehrere versetzte Sammelöffnungen (52) in derselben Ebene quer zur Längsachse (XX') und in regelmäßigen Abständen zueinander liegen, und/oder wobei mehrere versetzte Verteileröffnungen (42) in derselben Ebene quer zur Längsachse (XX') und in regelmäßigen Abständen zueinander liegen.

10. Reaktor nach einem der vorhergehenden Ansprüche, wobei die mindestens eine versetzte Sammelöffnung (52) und/oder die mindestens eine versetzte Verteileröffnung (42) durch Bearbeitung und/oder additive Herstellung erhalten werden.

## Claims

1. A fixed-bed tubular reactor (1) which extends, along a longitudinal axis (XX'), between a first end (11) and a second end (12),
the reactor (1) comprising a catalyst powder bed confined in an annular space (30) delimited by a first wall of a hollow tube (10) and a second wall (21) of a hollow insert (20), disposed in the hollow tube (10) coaxially with the latter,
the hollow insert (20) comprising at least one distribution chamber (40) and at least one collection chamber (50), separated from one another by a separating wall (60), and comprising, respectively, a gas intake opening (41) at the first end (11) and a gas discharge opening (51) at the second end (12),
the second wall (21) comprising at least one distribution opening (42) and at least one collection opening (52), the distribution opening (42) allowing the distribution of a gas capable of being admitted through the intake opening (41) of the distribution chamber (40) to the annular space (30), and the collection opening (52) allowing the collection of the gas distributed in the annular space (30) by the collection chamber (50),
**characterized in that** the second wall (21) of the hollow insert (20) includes, on at least a first longitudinal portion (Pl) of the insert (20) defined along the longitudinal axis (XX'), at least one offset distribution opening (42) and at least one offset collection opening (52), any offset distribution opening (42) being contained in a transverse plane (P1) to the longitudinal axis (XX') different from any transverse plane (P2) to the longitudinal axis (XX') containing an offset collection opening (52) such that the direction of the flow of gas distributed and/or admitted between an offset collection opening (52) and an offset distribution opening (42) has an axial component along the longitudinal axis (XX').

2. The reactor according to claim 1, wherein the second wall (21) of the hollow insert (20) includes, on at least one second longitudinal portion (PE) of the insert (20) defined along the longitudinal axis (XX'), at least one aligned distribution opening (42) and at least one aligned collection opening (52), any aligned distribution opening (42) being contained in a transverse plane to the longitudinal axis (XX') also containing at least one aligned collection opening (52) such that the direction of the flow of gas distributed and/or admitted between an aligned collection opening (52) and an aligned distribution opening (42) has a substantially zero axial component along the longitudinal axis (XX').

3. The reactor according to claim 2, wherein a plurality of aligned collector openings (52) and/or a plurality of aligned distribution openings (42) are axially aligned along the longitudinal axis (XX').

4. The reactor according to one of the preceding claims, wherein said at least one collection opening (52) and/or said at least one distribution opening (42) are chosen from: a longitudinal slot extending on a length (L) along the longitudinal axis (XX'); a transverse slot extending on a width (l) transversely to the longitudinal axis (XX'); a local orifice, particularly of circular, oval, oblong or rectangular shape.

5. The reactor according to any one of the preceding claims, wherein a plurality of offset collection openings (52) and/or a plurality of offset distribution openings (42) are respectively in the form of a cloud of offset collection openings (52) of which at least two are contained in the same transverse plane and/or in the form of a cloud of offset distribution openings (42) of which at least two are contained in the same transverse plane.

6. The reactor according to claim 5, wherein the cloud of offset collection openings (52) includes at least one offset collection opening (52) designated for a primary gas collection and at least one offset collection opening (52) designated for a secondary gas collection, different from the primary gas collection, and/or wherein the cloud of offset distribution openings (42) includes at least one offset distribution opening (42) designated for a primary gas distribution and at least one offset distribution opening (42) designated for a secondary gas distribution, different from the primary gas distribution.

7. The reactor according to any one of the preceding claims, wherein said at least one offset collection opening (52) and said at least one offset distribution opening (42) are not axially superposed along the longitudinal axis (XX').

8. The reactor according to any one of the preceding claims, wherein the minimum distance (Dm) between an offset collection opening (52) and an offset distribution opening (42) is between half the diameter of the insert (20) and half the total length (LI) of the insert (20).

9. The reactor according to any one of the preceding claims, wherein several offset collection openings (52) are located in the same transverse plane to the longitudinal axis (XX') and regularly spaced apart from each other, and/or wherein several offset distribution openings (42) are located in the same transverse plane to the longitudinal axis (XX') and regularly spaced apart from each other.

10. The reactor according to any one of the preceding claims, wherein said at least one offset collection opening (52) and/or said at least one offset distribution opening (42) are obtained by machining and/or additive manufacturing.
